# EUROPEAN PATENT SPECIFICATION

(11) **EP 0 731 595 B1**
(45) Date of publication and mention of the grant of the patent: **07.05.2003**
(21) Application number: 96400329.7
(22) Date of filing: 16.02.1996
(51) Int. Cl.: H04N 1/32

(54) **Off-hook detection apparatus**
Gerät zum Erkennen des Schleifenschlusszustands
Appareil de détection d'un mode de déconnexion

(30) Priority: 20.02.1995 JP 5513395
(43) Date of publication of application: 11.09.1996
(73) Proprietor: CANON KABUSHIKI KAISHA, Tokyo (JP)
(72) Inventor: Shimahara, Yuji, c/o Canon K.K., Tokyo (JP)
(74) Representative: Santarelli

(56) References cited:
- EP-A- 0 373 921
- EP-A- 0 608 181
- US-A- 4 958 371
- US-A- 5 086 455
- US-A- 5 140 631

## Description

### BACKGROUND OF THE INVENTION

### Field of the Invention

The present invention relates to a detection apparatus for detecting an off-hook of a telephone set or the like.

### Related Background Art

Hitherto, a current sensor utilizing a photocoupler, a Hall element, an MR element or the like has been arranged in serial between a line and a telephone set, in order to detect an off-hook of the telephone set connected to a facsimile apparatus.

It has been discriminated that the state of passing a current should be the off-hook and the state of not passing a current should be an on-hook by detecting a current which passes through the current sensor. At this time, as a line current has a polarity, a bidirectional photocoupler is used or the current sensor is operated bidirectionally to be able to detect both polarities.

An example of such a prior art as using the photocoupler will be described with reference to Figs. 3, 6A, 6B, 7A, 7B and 8.

Fig. 3 is a block diagram showing a peripheral structure of an off-hook detection unit 1 in the facsimile apparatus, and Fig. 3 indicates such a state as the off-hook detection unit 1 is arranged between a telephone line and the telephone set in serial. The detail will be described later.

Fig. 6A shows the off-hook detection unit 1 realized by a bidirectional photocoupler 2. Fig. 6B indicates a truth table at points A, B and C.

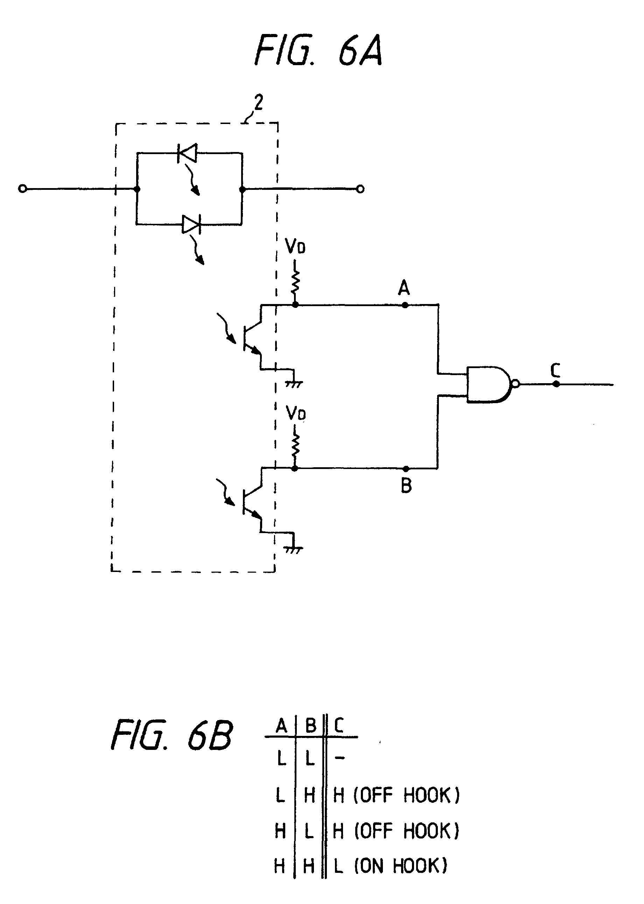

In Fig. 6A, when a current passes through the photocoupler 2, the point A or B becomes a LOW level, and the off-hook is discriminated when an off-hook detection output point C becomes a HIGH level.

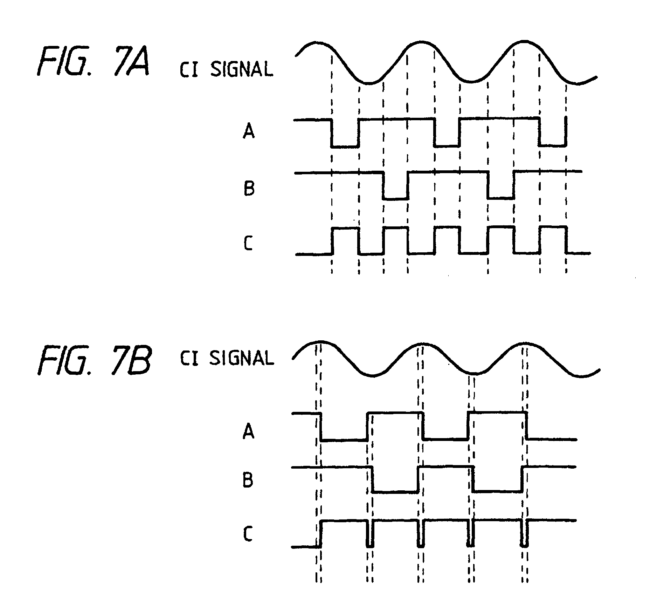

However, according to this system, when a call signal is received during the telephone set is in an on-hook state, the points A and B become the LOW level respectively at a portion of passing a current as shown in Fig. 7A. At this time, if the discrimination is performed by observing a waveform at the point C, it is discriminated that the on-hook state and the off-hook state are alternately repeated. Therefore, an integrating circuit has been inserted to an after stage of the point C or such a pattern has been disregarded in a software to eliminate chattering.

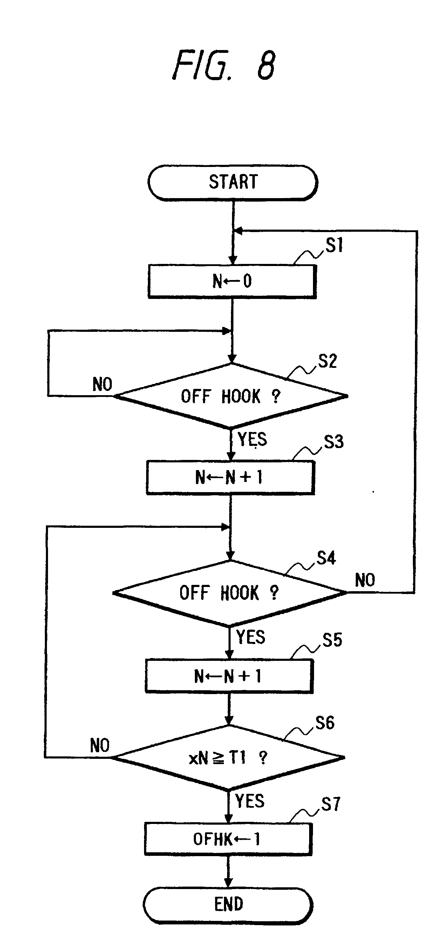

A chattering elimination method in the software will be described according to a flow chart of an off-hook detection shown in Fig. 8.

At first, in a step S1, an off-hook detection counter N is set for "0". Then, in a step S2, an off-hook detection output is observed. The flow advances to a step S3 if the state is in the off-hook, and the step S2 is looped if the state is not in the off-hook. This is a stand-by state.

In the step S3, an increment of counter N is performed, and the flow advances to a step S4 to observe the off-hook detection output again. If the state is not in the off-hook, the flow returns to the step S1 to reset the counter N. If the state is in the off-hook, the flow advances to a step S5 to perform the increment of counter N, and then the flow advances to a step S6.

A timing of observing the off-hook detection output in the steps S2 and S4 is given for each period of time x (msec) of an off-hook detection timer.

In the step S6, it is calculated how long the off-hook state has been continued on the basis of the period of time x of the off-hook detection timer to compare it with a preset off-hook judgement time T1. If the calculated result is shorter than T1, the flow returns to the step S4 to observe the off-hook detection output C again. If the calculated result is equal to or longer than T1, the flow advances to a step S7 to judge that the state is in the off-hook.

If the period of time x of the timer is long, a load of the software becomes weak and if it is short, the load becomes serious. In this manner, a chattering equal to or shorter than T1 can be eliminated.

However, in a case where a current is easy to flow due to a low-impedance for the call signal of the telephone set, or in a case where, depending on an amplitude and a frequency of the call signal, an output at the point C becomes such a state as shown in Fig. 7B, there occurred such a problem as thus state has been misconceived as the off-hook state in the chattering elimination method. This problem is same as in case of detecting the off-hook of an analog terminal of an extension in a key telephone system (KTS) and a private branch exchange (PBX).

### SUMMARY OF THE INVENTION

An object of the present invention is to enable to surely judge an off-hook when a state is in the off-hook without depending on an impedance, a frequency and an amplitude of a call signal.

Another object of the present invention is to minimize a load of a software, which is required to surely judge the off-hook.

Still another object of the present invention is to set an off-hook detection output such that an on-hook region corresponding to only a phase delayed by a delay element will be produced, and to make the off-hook detection output an on-hook output at a difference of non-operating region of current transfer coefficient.

These objects are achieved by an apparatus according to claim 1.

### BRIEF DESCRIPTION OF THE DRAWINGS

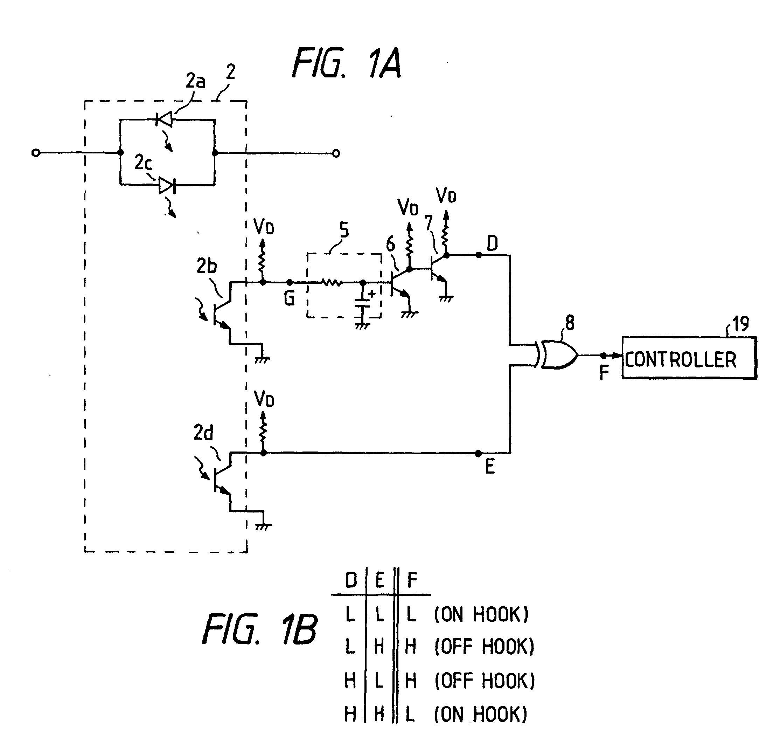

Figs. 1A and 1B are circuit diagrams showing the structure of an off-hook detection unit in a first embodiment of the present invention;

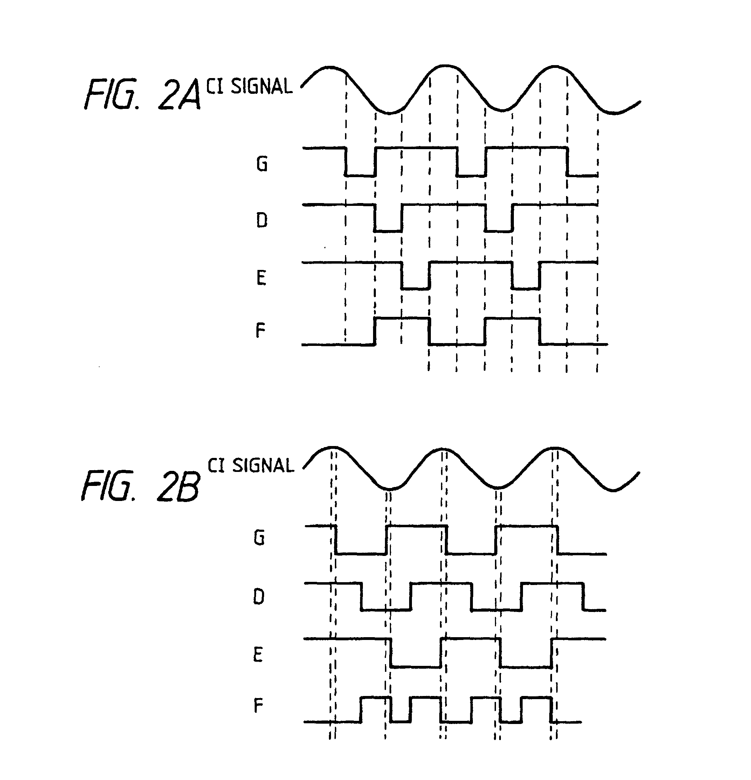

Figs. 2A and 2B are timing charts showing signal waveforms of the above first embodiment;

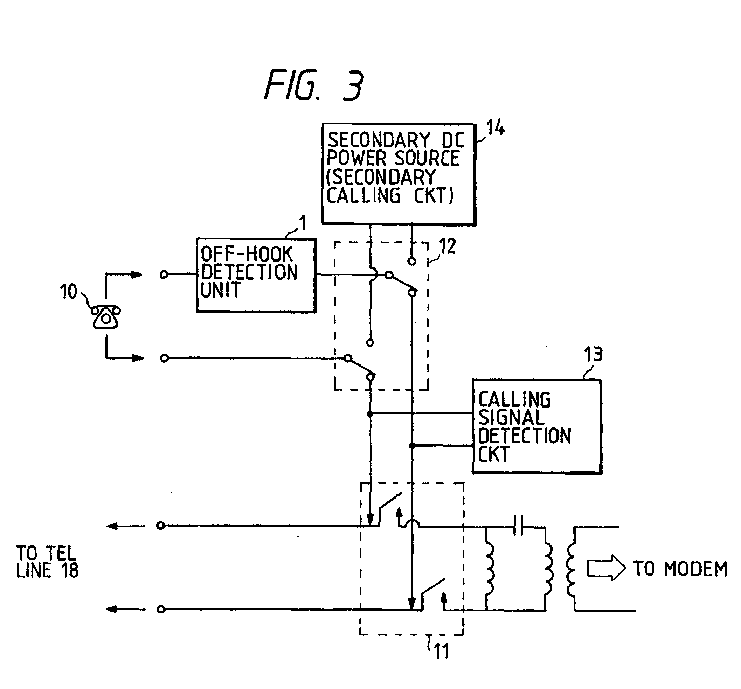

Fig. 3 is a block diagram showing a part of a network control unit (NCU) of a facsimile apparatus in which the above-mentioned off-hook detection unit is provided;

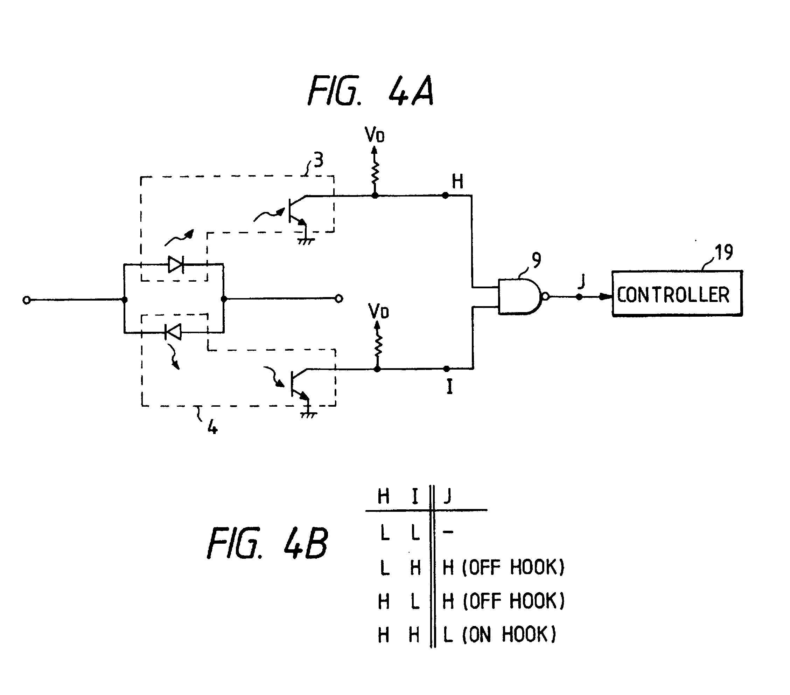

Figs. 4A and 4B are circuit diagrams showing the structure of an off-hook detection unit in a second embodiment of the present invention;

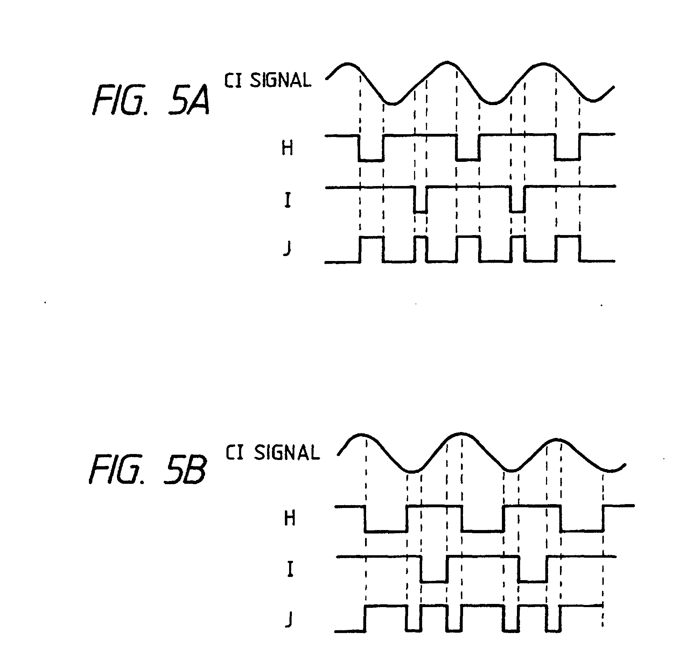

Figs. 5A and 5B are timing charts showing signal waveforms of the above second embodiment;
Figs. 6A and 6B are circuit diagrams showing the structure of an off-hook detection unit in the prior art;
Figs. 7A and 7B are timing charts showing signal waveforms of the prior art; and
Fig. 8 is a flow chart showing an operation of an off-hook detection unit.

### DETAILED DESCRIPTION OF THE PREFERRED EMBODIMENTS

Figs. 1A and 1B are circuit diagrams showing the structure of an off-hook detection unit 1 in a first embodiment of the present invention. Fig. 3 is a block diagram showing a part of a network control unit (NCU) of a facsimile apparatus in which the off-hook detection unit 1 is provided.

At first, peripheral circuits of the off-hook detection unit in the NCU will be described with reference to Fig. 3.

A CML relay 11 performs a switching whether a telephone line 18 is connected to a modem or to a telephone set 10. An H relay 12 performs a switching whether the telephone set 10 is connected to the telephone line 18 or to a secondary power source 14 in the facsimile apparatus.

The off-hook detection unit 1 composed of a current detection element and a delay circuit detects a current flowing between the telephone line 18 and the telephone set 10. Since a polarity of the flowing current is not constant, a detection element for detecting the current flowing in both directions is used. It should be noted that, as the telephone set 10, an automatic answering and recording telephone, an analog TV telephone, a modem phone or a modem-added computer can be connected.

A call signal detection circuit 13, which detects whether a call signal exists or not, is always arranged in parallel to the telephone line 18 when the CML relay 11 is connected to the telephone set 10 side, therefore, it is set to have a sufficient high-impedance.

The secondary power source 14, which is a DC power source, is used to detect an off-hook of the telephone set 10 disconnected from the line 18 by the H relay 12. The secondary power source 14 is also used as a call signal generator (secondary call circuit) for a secondary call of the telephone set 10 disconnected from the line by the H relay 12.

The off-hook detection unit 1 of the present embodiment, in which the delay circuit is realized by a CR integrating circuit 5, detects a current by utilizing a pair of photocoupler 2. That is, an output of one phototransistor 2b in the photocoupler 2 is connected to one input terminal of an exclusive OR gate 8 through the integrating circuit 5 and transistors 6 and 7, and an output of the other phototransistor 2d in the photocoupler 2 is connected to the other input terminal of the exclusive OR gate 8.

A current may be detected by using a current sensor which utilizes a Hall element or a current sensor which utilizes an MR element. The delay circuit may be an integrating circuit which utilizes an operation (OP) amplifier. The delay circuit may be inserted not only in one side but also in both sides of input terminals, such that these delay times may be set as different values respectively.

Fig. 1B is a truth table at points D, E and F shown in Fig. 1A. If the point F is in a HIGH-level, a main controller 19 in the facsimile apparatus judges that the state is in the off-hook.

In the above-mentioned configuration, when the facsimile apparatus is in a stand-by state, the CML relay 11 is switched to the telephone set 10 side, and the H relay 12 may be connected to either of the secondary power source 14 and the telephone line.

In this state, an off-hook output F is always observed by the main controller 19 in the facsimile apparatus, and a line current or a current flowing by the secondary power source is detected when the telephone set 10 is off hooked such that the main controller 19 judges the off-hook. The off-hook output, in a case where the call signal is transmitted through the telephone line 18 or the call signal is generated from the secondary call circuit 14 in this state, will be described with reference to Figs. 2A and 2B.

Figs. 2A and 2B show an example in which the call signal is delayed by the 1/4 wavelength in only one polarity. Fig. 2A is a timing chart in a case where an impedance of a ringer circuit in the telephone set 10 is in a high-level for the call signal. Fig. 2B is a timing chart in a case where the impedance is in a low-level. If the call signal is supplied to an input of the photocoupler 2, such waveforms as in Figs. 2A and 2B appear on points G and E respectively.

In the waveforms, a waveform at the point G delayed by the 1/4 wavelength utilizing the CR integrating circuit 5 appears as a waveform at the point D. An output obtained by combining the waveform at the point D with a waveform at the point E depending on the exclusive OR appears as a waveform at a point F. By delaying an one-way-directional output as mentioned above, even if the ringer circuit of any impedance is connected, an output having a duty ratio equal to or greater than a certain level can be obtained. The main controller 19 in the facsimile apparatus observes the output at this point F by using a software, to judge the off-hook only when a HIGH-level state has been continued for a certain period of time depending on the truth table shown in the drawing. As above, the call signal is not misconceived as the off-hook in any case by delaying the one-way-directional output of a bidirectional current detection element.

When the call circuit 14 generates the call signal to off-hook the telephone set, the main controller 19 controls the CML relay and the H relay such that the telephone set 10 is connected to the telephone line.

A delay time of the delay circuit should be first set on condition that the observation in the software is surely performed and a load necessary for observation is sufficiently small. That is, in a case where a port of the off-hook output is observed by an interruption timer of the software, such the observation is performed on condition that an off-hook state can be always distinguished from a call signal reception state even if a timer, which has an observation time as long as possible, is used to perform the observation.

As apparent from Fig. 2B, the off-hook output at the point F is in an on-hook region only during the period of time of delaying the waveform at the point G when the call signal is transmitted. However, when the delay time corresponds to the 1/2 wavelength of the call signal, the on-hook output becomes a maximum. At this time, the output almost is not in the off-hook region.

Therefore, the delay time has to be set to about 1/2 wavelength of the call signal. In a case where the delay time is fixed by a hardware, if it is fixed to about 1/2 wavelength of the maximum one in the frequencies of the expected call signal, the on-hook region corresponding to thus about 1/2 wavelength is produced even in case of any frequency.

In a case where the off-hook detection output is observed by such a software as in Fig. 8, it is set a time x at which it is judged that the state is not in the off-hook in the stage of the step S4 in a flow chart shown in Fig. 8. That is, if the off-hook detection output is observed by the timer equal to or shorter than 1/2 wavelength of the maximum frequency, it is surely recognized that the state is in the on-hook.

As described above, the call signal when the telephone set 10 is in the on-hook state is not misconceived as the off-hook, by making the delay times of one and the other outputs of the off-hook detection photocoupler 2 different from each other.

The off-hook can be observed by such a software as in Fig. 8. Instead of the photocoupler 2, the Hall element or the like can be used for the current detection.

It should be noted that the off-hook detection unit 1 shown in Fig. 1A may be used for detecting the off-hook of an analog terminal admitted to an extension of a key telephone system (KTS) or a private branch exchange (PBX).

### <Another Embodiment>

Another embodiment of the present invention will be described with reference to Figs. 3 to 5B.

In Fig. 3, an off-hook detection unit 1 of the present embodiment is, for example, composed of a first current detection element 3 and a second current detection element 4, as shown in Figs. 4A and 4B, and detects a current flowing between a telephone line 18 and a telephone set 10. Since a polarity of the flowing current is not constant, the two current detection elements 3 and 4 are arranged such that the current in both directions can be detected. The first current detection element 3 and the second current detection element 4 respectively have different current transference coefficients, i.e., different current detection sensitivities.

It should be noted that the current transference coefficient of a photocoupler in the first embodiment is common to that of this embodiment. Other configuration in Fig. 3 is common to that of the above-mentioned embodiment, whereby the detailed description will be omitted.

Fig. 4A shows an example in which the current detection elements 3 and 4 are realized by an individual photocoupler. Photocouplers respectively have the different current transference coefficients. An output of a phototransistor in each of the photocouplers is connected to each of input terminals of an AND gate 9.

It should be noted that the current detection elements 3 and 4 may be current sensors utilizing a Hall element or an MR element.

When a facsimile apparatus is in a stand-by state, a CML relay 11 is switched to the telephone set 10 side. An H relay 12 may be connected to a secondary power source 14 or to the telephone line.

In this state, an off-hook output is always observed, and a line current or a current flowing from the secondary power source 14 is detected to judge an off-hook when the telephone set 10 is off-hooked. The off-hook output, in a case where a call signal is transmitted through the telephone line or the call signal is generated from the secondary call circuit 14 in this state, will be described with reference to Figs. 5A and 5B.

Fig. 5A is a timing chart in a case where an impedance of a ringer circuit in the telephone set 10 is in a high-level for the call signal. Fig. 5B is a timing chart in a case where the impedance is in a low-level. If the call signal is supplied to an input of the photocoupler shown in Fig. 4A, such waveforms as in Figs. 5A and 5B appear on points H and I respectively. An output obtained by combining this waveform at the point H with the waveform at the point I utilizing the AND gate 9 becomes a waveform at a point J.

In this manner, even if the ringer circuit in the telephone set 10 has any impedance, an output having a duty ratio equal to or greater than a certain level can be obtained by arranging the photocouplers having different current detection sensitivities in both directions. The main controller 19 observes the output at this point J by a software to judge the off-hook when a HIGH-level state has been continued for a certain period of time depending on a truth table shown in Fig. 4B. As above, the call signal is not misconceived as the off-hook in any case without depending on the impedance of the telephone set or a frequency or an amplitude of the call signal by setting such a state as current transference coefficients of two current detection elements are different from each other.

When the call signal is generated in the secondary call circuit 14, if the off-hook of the telephone set 10 is detected, the main controller 19 controls the CML relay and the H relay such that the telephone set 10 is connected to the telephone line.

As described above, the call signal when the telephone set is in the off-hook state is not misconceived as the off-hook by using two current sensors in the off-hook detection unit to set current transference coefficients different from each other. The off-hook can be detected by the observation of the software shown in Fig. 8.

The off-hook detection unit shown in Figs. 4A and 4B also can be utilized in a key telephone system (KTS) or a private branch exchange (PBX).

As described above, according to the present invention, the off-hook of the terminal can be accurately distinguished from the call signal by connecting the two sensors, which have different time characteristics, between the terminal and the line in such a manner that a polarity of each sensor becomes inverse.

To realize the above situation, the delay circuit may be provided in one sensor, or the delay circuits having different delay times may be provided in both sensors. Also, the sensors having different sensitivities may be used.

As the sensor, the photocoupler, the Hall element or the MR element may be used.

In the case where the delay circuit is used, this delay circuit may be composed of the CR circuit, the OP amplifier and the like.

The present invention is not limited to the off-hook detection of the telephone set connected to the facsimile apparatus, but can be applied to the off-hook detection of an extension telephone in the key telephone system (KTS) or the private branch exchange (PBX).

As the telephone set, an automatic answering and recording telephone, an analog TV telephone, a modem phone or the like may be connected. Further, the present invention can be utilized in detecting the off-hook of the terminals to which a modem-added computer and the like are connected instead of the telephone set.

## Claims

1. An off-hook detection apparatus comprising:
- connection means (11, 12) for connecting a line (18) to a terminal (10);
- first current detection means (2a, 2b) for outputting a first detection output (G) in accordance with a current which flows in a first direction on the line;
- second current detection means (2c, 2d) for outputting a second detection output (E) in accordance with the current which flows in a second direction on the line ;
- off-hook detection means (8, 19, 9) for detecting an off-hook of the terminal in accordance with said first and second detection outputs (G, E); and
- first delay means (5, 6, 7) connected between said first current detection means (2a, 2b) and said off-hook detection means (8, 19, 9) ; wherein
- the first detection output (G) is input into said off-hook detection means (8, 19, 9) by said first delay means (5, 6, 7) after a first period of time when the current flows in the first direction on the line; and
- the second detection output (E) is input into said off-hook detection means (8, 19, 9) after a second period of time which is shorter than said first period of time, when the current flows in the second direction on the line.

2. An apparatus according to claim 1, wherein the second detection output (E) is input into said off-hook detection means (8, 19, 9) without delay time.

3. An apparatus according to claim 1, wherein second delay means is connected between said second current detection means (2c, 2d) and said off-hook detection means (8, 19, 9), said second delay means having a second delay time which is different from the delay time of said first delay means.

4. An apparatus according to claim 1, wherein the delay time by said first delay means is determined in accordance with a frequency of a calling signal.

5. A facsimile apparatus comprising the off-hook detection apparatus according to claim 1.

## Patentansprüche

1. Gerät zur Ermittlung eines Schleifenschlußzustands, mit
einer Verbindungseinrichtung (11, 12) zur Verbindung einer Leitung (18) mit einer Endeinrichtung (10),
einer ersten Stromdetektoreinrichtung (2a, 2b) zur Erzeugung eines ersten Detektionsausgangssignals (G) in Abhängigkeit von einem in einer ersten Richtung über die Leitung fließenden Strom,
einer zweiten Stromdetektoreinrichtung (2c, 2d) zur Erzeugung eines zweiten Detektionsausgangssignals (E) in Abhängigkeit von einem in einer zweiten Richtung über die Leitung fließenden Strom,
einer Schleifenschluß-Detektoreinrichtung (8, 19, 9) zur Ermittlung eines Schleifenschlußzustands der Endeinrichtung in Abhängigkeit von dem ersten Detektionsausgangssignal (G) und dem zweiten Detektionsausgangssignal (E), und
einer zwischen die erste Stromdetektoreinrichtung (2a, 2b) und die Schleifenschluß-Detektoreinrichtung (8, 19, 9) geschalteten ersten Verzögerungseinrichtung (5, 6, 7), wobei
das erste Detektionsausgangssignal (G) der Schleifenschluß-Detektoreinrichtung (8, 19, 9) von der ersten Verzögerungseinrichtung (5, 6, 7) nach einer ersten Zeitdauer zugeführt wird, wenn der Strom in der ersten Richtung über die Leitung fließt, und
das zweite Dektektionsausgangssignal (E) der Schleifenschluß-Detektoreinrichtung (8, 19, 9) nach einer in Bezug zu der ersten Zeitdauer kürzeren zweiten Zeitdauer zugeführt wird, wenn der Strom in der zweiten Richtung über die Leitung fließt.

2. Gerät nach Anspruch 1, bei dem das zweite Detektionsausgangssignal (E) der Schleifenschluß-Detektoreinrichtung (8, 19, 9) ohne eine Verzögerungszeit zugeführt wird.

3. Gerät nach Anspruch 1, bei dem eine zweite Verzögerungseinrichtung zwischen die zweite Stromdetektoreinrichtung (2c, 2d) und die Schleifenschluß-Detektoreinrichtung (8, 19, 9) geschaltet ist, wobei die zweite Verzögerungseinrichtung eine zweite Verzögerungszeit bildet, die in Bezug auf die Verzögerungszeit der ersten Verzögerungseinrichtung unterschiedlich ist.

4. Gerät nach Anspruch 1, bei dem die Verzögerungszeit der ersten Verzögerungseinrichtung in Abhängigkeit von der Frequenz eines Anrufsignals bestimmt wird.

5. Faksimilegerät, das das Gerät zur Ermittlung eines Schleifenschlußzustands nach Patentanspruch 1 aufweist.

## Revendications

1. Appareil de détection d'un état décroché, comportant :
- un moyen de connexion (11, 12) destiné à connecter une ligne (18) à une borne (10) ;
- un premier moyen (2a, 2b) de détection de courant destiné à délivrer en sortie un premier signal de sortie de détection (G) conforme à un courant qui circule dans un premier sens sur la ligne ;
- un second moyen (2c, 2d) de détection de courant destiné à délivrer en sortie un second signal de sortie de détection (E) conforme au courant qui circule dans un second sens sur la ligne ;
- un moyen (8, 19, 9) de détection d'état décroché destiné à détecter un état décroché du terminal conformément auxdits premier et second signaux de sortie de détection (G, E) ; et
- un premier moyen à retard (5, 6, 7) connecté entre ledit premier moyen (2a, 2b) de détection de courant et ledit moyen (8, 19, 9) de détection d'état décroché ; dans lequel
- le premier signal de sortie de détection (G) est appliqué en entrée dans ledit moyen (8, 19, 9) de détection d'état décroché par ledit premier moyen à retard (5, 6, 7) après une première période de temps lorsque le courant circule dans le premier sens sur la ligne ;
- le second signal de sortie de détection (E) est appliqué en entrée dans ledit moyen (8, 19, 9) de détection d'état décroché après une seconde période de temps qui est plus courte que ladite première période de temps, lorsque le courant circule dans le second sens sur la ligne.

2. Appareil selon la revendication 1, dans lequel le second signal de sortie de détection (E) est appliqué en entrée dans ledit moyen (8, 19, 9) de détection d'état décroché sans temps de retard.

3. Appareil selon la revendication 1, dans lequel un second moyen à retard est connecté entre lesdits second moyen (2c, 2d) de détection de courant et ledit moyen (8, 19, 9) de détection d'état décroché, ledit second moyen à retard ayant un second temps de retard qui est différent du temps de retard dudit premier moyen à retard.

4. Appareil selon la revendication 1, dans lequel le temps de retard établi par ledit premier moyen à retard est déterminé conformément à une fréquence d'un signal d'appel.

5. Appareil de télécopie comportant l'appareil de détection d'état décroché selon la revendication 1.
